# EUROPEAN PATENT SPECIFICATION

(11) **EP 2 505 470 B1**
(45) Date of publication and mention of the grant of the patent: **05.10.2016**
(21) Application number: 12160699.0
(22) Date of filing: 22.03.2012
(51) Int. Cl.: B62K 25/28, B62H 1/02, B62H 1/06, B62K 11/10, B62K 19/46

(54) **Frame structure of saddle riding type vehicle**
Rahmenstruktur für ein Sattelfahrzeug
Structure de carter de véhicule de type à enfourcher

(30) Priority: 26.03.2011 JP 2011069018; 31.01.2012 JP 2012018463
(43) Date of publication of application: 03.10.2012
(73) Proprietor: Honda Motor Co., Ltd., Tokyo 107-8556 (JP)
(72) Inventor: Yokouchi, Kohei, Saitama, 351-0193 (JP); Maruyama, Tomoyuki, Saitama, 351-0193 (JP); Nagayama, Masashi, Saitama, 351-0193 (JP)
(74) Representative: Beder, Jens

(56) References cited:
- EP-A1- 1 818 249
- EP-A1- 2 502 816
- EP-A2- 1 063 154
- DE-A1-102004 048 246

## Description

The present invention relates to a frame structure of a saddle riding type vehicle including a cushion connected to a swing arm.

A known saddle riding type vehicle includes a pair of left and right seat rails disposed downwardly of an occupant seat, a cross pipe for connecting the pair of seat rails at a rearward portion of the seat rails, a storage box disposed downwardly of the seat, a swing arm for rotatably holding a rear wheel, and a rear cushion (cushion) having an upper end portion supported by the cross pipe via a bracket and a lower end portion connected to the swing arm (see, for example, Japanese Patent No. 4119344).

[Patent Document 1]
Japanese Patent No. 4119344

In the saddle riding type vehicle disclosed in patent document 1, an impact force applied from a road surface to the rear wheel is absorbed by a shock absorbing function of the rear cushion. Stiffness of a vehicle body frame is therefore required at a portion of the vehicle body frame for supporting the upper end portion of the rear cushion. Accordingly, the bracket and the cross pipe for supporting the rear cushion tend to become large in size. This has resulted in a reduced space available downward of the seat, so that the storage box downward of the seat may have a small volume.

EP 1 063 154 discloses a frame structure of a saddle riding type vehicle according to the preamble of claim 1.

An object of the present invention is to provide a frame structure of a saddle riding type vehicle, capable of making capacity of a storage box large by reducing a cross pipe in size, while achieving stiffness of a vehicle body frame.

The present invention provides a frame structure of a saddle riding type vehicle according to claim 1.

The present invention as defined in claim 2, in addition to the arrangement as defined in claim 1, is characterized in that, the pair of the cross pipes has curved portions that are curved so as to protrude to a downward side; and the storage box is disposed on an upward side of the curved portions.

The present invention as defined in claim 3, in addition to the arrangement as defined in claim 2, is characterized in that, of the pair of cross pipes, a first cross pipe disposed at a front side is inclined so as to extend downwardly toward a rear in a side view.

The present invention as defined in claim 4, in addition to the arrangement as defined in claim 2 or 3, is characterized in that, the pair of cross pipes is attached to lower portions on an inside of the pair of seat rails; and the upper end support bracket is formed into a downwardly opening U-shape in a rear view.

The present invention as defined in claim 5, in addition to the arrangement as defined in any of claims 2 to 4, is characterized in that, the curved portion in the first cross pipe disposed at the front side or a second cross pipe disposed at a rear side of the pair of cross pipes includes a horizontal portion; the upper end support bracket has a mounting hole portion for supporting the cushion; and at least part of the mounting hole portion is disposed between an uppermost end and a lowermost end of the horizontal portion in a side view.

According to the present invention as defined in claim 1, the vehicle body frame includes a pair of cross pipes extending laterally in the rear portion of the pair of seat rails to thereby connect the pair of seat rails and spaced apart longitudinally from each other. Even if pipes with a small diameter is used for the cross pipes, therefore, stiffness equivalent to that of a single cross pipe having a large diameter and high stiffness can be achieved. The cross pipes can thereby be prevented from becoming large in size. As a result, a volume of the storage box can be made large. In addition, the rear cushions can be installed in a condition in which a compression range (stroke) is secured.

Additionally, the upper end support bracket is provided that connects the pair of cross pipes and supports an upper end portion of the rear cushion. The upper end support bracket is what is called a both end supported structure having both end portions connected to the pair of cross pipes. As such, the pair of cross pipes is connected with the upper end support bracket, which enhances stiffness of the vehicle body frame.

According to the present invention as defined in claim 2, the pair of the cross pipes has the curved portions that are curved so as to protrude to a downward side and the storage box is disposed on an upward side of the curved portions. Consequently, the volume of the storage box can be made large in a portion in which the storage box is disposed on the upward side of the curved portions.

According to the present invention as defined in claim 3, of the pair of cross pipes, the first cross pipe disposed at the front side is inclined so as to extend downwardly toward the rear in a side view. As a result, the first cross pipe is inclined in the stroke direction in which the cushion is compressed. As a result, part of load in the stroke direction from the cushion acts on a portion at which the first cross pipe is joined to the seat rail. Accordingly, the first cross pipe can enhance stiffness of the vehicle body frame relative to the load in the stroke direction received from the cushion.

According to the present invention as defined in claim 4, the pair of cross pipes is attached to the lower portions on the inside of the pair of seat rails. This causes part of a force received from the cushion to tend more easily to act on the side of the seat rails via joint portion between the pair of cross pipes and the seat rails. Accordingly, the pair of cross pipes can enhance stiffness of the vehicle body frame relative to the load in the stroke direction received from the cushion.

Additionally, the upper end support bracket is formed into a downwardly opening U-shape in a rear view. The upper end support bracket can therefore be simply structured. Stiffness of the vehicle body frame can thus be enhanced with a simple structure.

According to the present invention as defined in claim 5, at least part of the mounting hole portion is disposed, in a side view, between the uppermost end and the lowermost end of the horizontal portions. As a result, the upper end portion of the cushion is connected to the mounting hole portion on an even upward side. The cushion can thus be installed in a condition in which a compression range (stroke) is secured.

In the present invention, the seat rails have rear end portions bent downwardly in a side view and, of the pair of the cross pipes, the second cross pipe disposed at the rear side is connected to the rear end portions of the seat rails. This eliminates the need for finishing and related operations for the rear end portions of the seat rails.

Fig. 1 is a left side elevational view showing a frame structure of a scooter type motorcycle as a saddle riding type vehicle according to a first embodiment (not claimed).
Fig. 2 is a left side elevational view showing a main section of the frame structure of the motorcycle shown in Fig. 1.
Fig. 3 is a rear elevational view showing the frame structure of the motorcycle shown in Fig. 1, as viewed from a rear portion side.
Fig. 4 is a perspective view showing the frame structure of the motorcycle shown in Fig. 2.
Fig. 5 is a left side elevational view showing a main section of a frame structure of a motorcycle according to a second embodiment of the present invention.
Fig. 6 is a rear elevational view showing the frame structure of the motorcycle shown in Fig. 5, as viewed from a rear portion side.
Fig. 7 is a bottom view showing the frame structure of the motorcycle shown in Fig. 5, from which a rear cushion is removed, as viewed from a lower portion side.

A frame structure of a motorcycle according to an embodiment (not claimed), in which a saddle riding type vehicle is applied to a scooter type motorcycle, will be described below with reference to the accompanying drawings. A scooter type motorcycle 1 according to the embodiment includes a low floor footrest portion (not shown).

Throughout the descriptions given hereunder, longitudinal, lateral, and vertical directions are relative to an occupant (rider) of the motorcycle unless otherwise noted. In the drawings, an arrow FR denotes a vehicle forward direction (direction of travel), an arrow UP denotes a vehicle upward direction, and an arrow LH denotes a leftward direction as viewed in the direction of travel of the motorcycle.

### <First Embodiment>

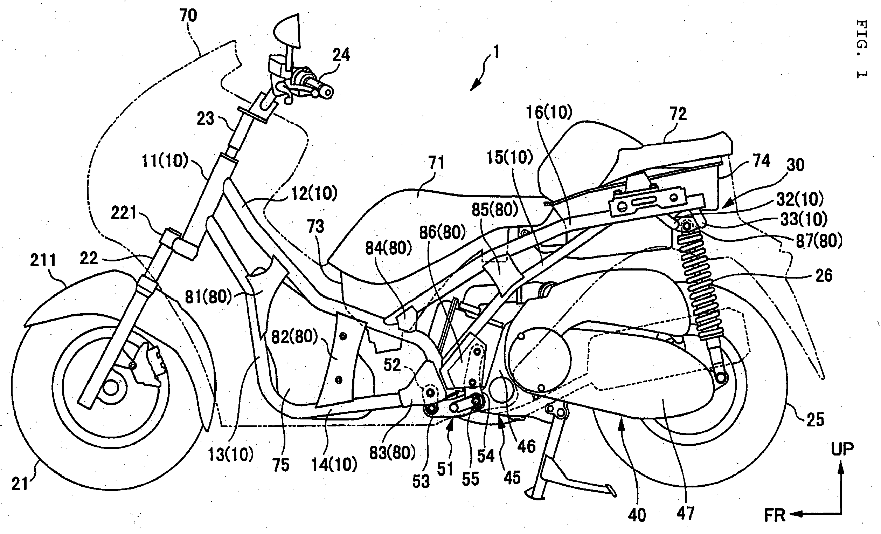

General arrangements of the motorcycle 1 according to the first embodiment will be described below with reference to Fig. 1. Fig. 1 is a left side elevational view showing a frame structure of the scooter type motorcycle as the saddle riding type vehicle according to the first embodiment.

Referring to Fig. 1, the motorcycle 1 of the first embodiment mainly includes a vehicle body frame 10, a front wheel 21, a front fender 211, a pair of left and right front forks 22, a steering stem 23, a handlebar 24, a rear wheel 25, a swing unit 40, a linkage mechanism 51, a rear cushion 26, a front portion seat 71, a rear portion seat 72, a cover member 70, a front portion storage box 73, a rear portion storage box 74, and a fuel tank 75. Specifically, the front fender 211 is disposed upwardly of the front wheel 21. The pair of front forks 22 journals the front wheel 21. The steering stem 23 supports the pair of front forks 22 laterally rotatably relative to a head pipe 11 via a bottom bridge 221. The handlebar 24 is connected to an upper end of the steering stem 23 and steers the front wheel 21. The swing unit 40 as a swing arm journals the rear wheel 25 at a rear end side. The linkage mechanism 51 is disposed between the swing unit 40 and the vehicle body frame 10 at a substantially central position in a vehicle longitudinal direction. The rear cushion 26 is disposed as a cushion between the swing unit 40 and the vehicle body frame 10 at the rearward of the vehicle. The front portion seat 71. is a seat on which a rider sits. The rear portion seat 72 is a seat on which a passenger sits. The cover member 70 covers different parts of the vehicle. The rear portion storage box 74 functions also as a storage box.

The vehicle body frame 10 is formed by integrally joining a plurality of types of steel stocks through, for example, welding. The vehicle body frame 10 is formed to include the head pipe 11, an upper frame 12, a down frame 13, an under frame 14, a rear frame 15, a seat rail 16, a plurality of cross members (including a first cross pipe 32 and a second cross pipe 33), and a fastening bracket 80.

A frame structure 30 of the motorcycle 1 according to the first embodiment is formed to include mainly the pair of seat rails 16, the pair of cross pipes 32 and 33, an upper end support bracket 87, the rear portion storage box 74, the swing unit 40, and the rear cushion 26.

The frame structure 30 will be described in detail later.

The head pipe 11 is disposed at a front end portion of the vehicle body frame 10.

The upper frame 12 is provided in a pair at the left and right. The pair of left and right upper frames 12 is connected to the head pipe 11 at a front end portion thereof in a side view. The pair of upper frames 12 has a rear end portion side extending obliquely downwardly toward the rear.

The down frame 13 is provided in a pair at the left and right. The pair of down frames 13 is disposed downwardly of the upper framers 12. The pair of down frames 13 is connected to the head pipe 11 at a front end portion thereof in a side view. The pair of down frames 13 has a rear end portion side extending from the head pipe 11 obliquely downwardly toward the rear.

The under frame 14 is provided in a pair at the left and right. The pair of under frames 14 has a front end portion connected to a lower end of the pair of down frames 13. The pair of under frames 14 has a rear end portion extending rearwardly from the pair of down frames 13.

The seat rail 16 is provided in a pair at the left and right. The pair of seat rails 16 is disposed downwardly of the front portion seat 71 and the rear portion seat 72. The pair of seat rails 16 has a first end side connected, in a side view, to the pair of upper frames 12 at a position near the central portion in the vehicle longitudinal direction. The pair of seat rails 16 has a rear end side extending rearwardly.

The rear frame 15 is provided in a pair at the left and right. The pair of rear frames 15 has a first end side connected to a lower portion of the pair of upper frames 12. More specifically, the pair of rear frames 15 has the first end side joined to a rear side of a portion to which a third front bracket 83 to be described later is connected at a lower portion of the upper frames 12. The pair of rear frames 15 has a second end side extending obliquely upwardly toward the rear and connected to a rear portion side of the pair of seat rails 16.

The cross members are formed of pipe members extending laterally, connecting the pairs of upper frames 12, down frames 13, under frames 14, rear frames 15, and seat rails 16 laterally. The cross members are formed to include the pair of cross pipes 32 and 33. The pair of cross pipes 32 and 33 connects the pair of seat rails 16 laterally at a rear portion of the pair of seat rails 16.

The pair of cross pipes 32 and 33 will be described in detail later.

The fastening bracket 80 reinforces the vehicle body frame 10 to thereby enhance stiffness of the vehicle body frame 10. The fastening bracket 80 is disposed at different places in the vehicle body frame 10.

The fastening bracket 80 is formed to include a first front bracket 81, a second front bracket 82, a third front bracket 83, a first rear bracket 84, a second rear bracket 85, a sub-bracket 86, and the upper end support bracket 87.

The first front bracket 81 is provided in a pair at the left and right. The pair of first front brackets 81 connects lower sides at front portion sides of the upper frames 12 and rear sides near centers of the down frames 13.

The second front bracket 82 is provided in a pair at the left and right. The pair of second front bracket 82 connects lower sides near centers of the upper frames 12 and upper sides near centers of the under frames 14.

The third front bracket 83 is provided in a pair at the left and right. The pair of third front bracket 83, connects front sides of lower portions of the upper frames 12 and rear sides of the under frames 14. The pair of third front bracket 83 is joined to the upper frames 12 along a direction in which the upper frames 12 extend.

The first rear bracket 84 is provided in a pair at the left and right. The pair of first rear brackets 84 connects upper sides at rear portion sides relative to the centers of the upper frames 12 and lower sides of front portions of the seat rails 16.

The second rear bracket 85 is provided in a pair at the left and right. The pair of second rear brackets 85 connects lower sides of forward portion sides relative to the centers of the seat rails 16 and upper sides near centers of the rear frames 15.

The sub-bracket 86 is disposed on the left side in a vehicle width direction. The sub-bracket 86 connects the rear side of the lower portion of the upper frame 12 and the lower side of the front portion of the rear frame 15. The sub-bracket 86 is joined to the upper frame 12 along the direction in which the upper frame 12 extends and to the rear frame 15 along a direction in which the rear frame 15 extends.

The upper end support bracket 87 connects the pair of cross pipes 32 and 33 in the longitudinal direction.

The upper end support bracket 87 will be described in detail later.

The swing unit 40 is swingably supported on the vehicle body frame 10. The swing unit 40 is swingably supported on the vehicle body frame 10 via the linkage mechanism 51 to be described later at the front side and via the rear cushion 26 at a rear end portion. In addition, the swing unit 40 rotatably holds the rear wheel 25 on a rearward side.

The swing unit 40 is formed by integrating an engine 45 with a power transmission mechanism 47.

The engine 45 is a power unit (prime mover) for generating a driving force of the motorcycle 1 and disposed at a substantially central portion in the vehicle longitudinal direction. The engine 45 includes a crankcase 46 at a rear portion side thereof. The engine 45 is connected to a pivot shaft 55 of the linkage mechanism 51 to be described later at a lower end of a front portion of the crankcase 46.

The power transmission mechanism 47 transmits a driving force of the engine 45 to the rear wheel 25. Mounted on the engine 45 by being disposed at a rear portion side thereof, the power transmission mechanism 47, together with the engine 45, constitutes the swing unit 40. The power transmission mechanism 47 is disposed on the left side in the vehicle width direction. The power transmission mechanism 47 includes a belt type continuously variable transmission (not shown).

The belt type continuously variable transmission is formed to include mainly a drive pulley (not shown), a driven pulley (not shown), and a V-belt (not shown). Specifically, the drive pulley is connected to a crankshaft that serves as an output shaft of the engine 45. The driven pulley is connected to a rear wheel axle. The V-belt is trained over the drive pulley and the driven pulley. The belt type continuously variable transmission varies a gear ratio by continuously changing a winding diameter of the V-belt relative to the drive pulley and the driven pulley.

The linkage mechanism 51 permits vertical and longitudinal swing motions of the swing unit 40 to thereby absorb an impact force applied from a road surface to the rear wheel 25. The linkage mechanism 51 is supported by the swing unit 40.

The linkage mechanism 51 is formed to include a first linkage member 52, a second linkage member 53, a connecting rod 54, and the pivot shaft 55. The swing unit 40 is swingable about the pivot shaft 55.

The first linkage member 52 is provided in a pair at the left and right. The first linkage member 52 extends substantially vertically. The first linkage member 52 has an upper end portion rotatably supported on the third front bracket 83. The first linkage member 52 has a lower end portion supported rotatably on a front end portion of the second linkage member 53.

The second linkage member 53 is provided in a pair at the left and right. The second linkage member 53 extends substantially longitudinally. The pivot shaft 55 is disposed at a rear end portion of the second linkage member 53. The second linkage member 53 has the rear end portion connected to the swing unit 40 via the pivot shaft 55 and rotatably supported on a lower end portion of the connecting rod 54.

The connecting rod 54 is disposed on the left side of the vehicle. The connecting rod 54 extends substantially vertically. The connecting rod 54 has an upper end portion supported rotatably on an upper end portion of the sub-bracket 86. In addition, the connecting rod 54 has a substantially central portion connected longitudinally swingably to a lower end portion of the sub-bracket 86.

The first linkage member 52 and the connecting rod 54 are disposed so as to extend substantially in parallel with each other to thereby constitute a linkage mechanism. The connecting rod 54 has the lower end portion connected to the swing unit 40 via the pivot shaft 55. Accordingly, the first linkage member 52 and the connecting rod 54 permit longitudinal movements of the swing unit 40. It is noted that the linkage mechanism 51 includes a restricting portion (not shown) for restricting longitudinal movements of the swing unit 40.

The second linkage member 53 extends longitudinally and rotates about the third front bracket 83 via the first linkage member 52. The rear end portion of the second linkage member 53 is formed as the pivot shaft 55 and connected to the swing unit 40. Accordingly, the second linkage member 53 permits vertical movements of the swing unit 40.

The rear cushion 26 absorbs the impact force applied from the road surface to the rear wheel 25 by its shock absorbing function. The rear cushion 26 is provided in a pair at the left and right. The pair of rear cushions 26 has an upper end portion connected to the upper end support bracket 87. The rear cushion 26 has a lower end portion connected to the rear end portion of the swing unit 40.

The rear cushion 26 extends linearly along a line connecting between the upper end support bracket 87 and the rear end portion of the swing unit 40. The rear cushion 26 is installed in a condition in which a compression range (stroke) is secured. The rear cushion 26 is inclined in a stroke direction in which the rear cushion 26 is compressed. The rear cushion 26 is inclined so as to extend downwardly toward the rear.

The front portion storage box 73 and the rear portion storage box 74 store such articles as a helmet and a luggage. The front portion storage box 73 and the rear portion storage box 74 are disposed along the pair of seat rails 16 at a position downward of the front portion seat 71 and the rear portion seat 72.

The front portion storage box 73 is disposed between the pair of seat rails 16 at a substantially central position in the vehicle longitudinal direction. The front portion storage box 73 is supported by the pair of seat rails 16.

The rear portion storage box 74 is disposed between the pair of seat rails 16 at a position rearward of the front portion storage box 73. The rear portion storage box 74 is supported by the pair of seat rails 16.

The front portion seat 71 is a seat on which the rider sits during running. The front portion seat 71 is disposed upwardly of the front portion storage box 73. The front portion seat 71 is configured so as to open or close an opening in the front portion storage box 73, functioning also as a lid member for the front portion storage box 73.

The rear portion seat 72 is a seat on which the passenger sits during running. The rear portion seat 72 is disposed upwardly of the rear portion storage box 74 at a position rearward of the front portion seat 71. The rear portion seat 72 is configured so as to open or close an opening in the rear portion storage box 74, functioning also as a lid member for the rear portion storage box 74.

The cover member 70 is formed to include, for example, a front cover, a center cover, a rear cover, and an under cover. Specifically, the front cover covers areas forward of the handlebar 24 and upward of the front wheel 21. The center cover covers both lateral side surfaces of a front portion of the vehicle body frame 10. The rear cover covers a rear portion of the vehicle and an area upward of the rear wheel 25. The under cover covers both lateral side surfaces of the lower portion of the vehicle body frame 10.

The fuel tank 75 is held by the pair of down frames 13 and the pair of under frames 14 on a side downward of the pair of upper frames 12.

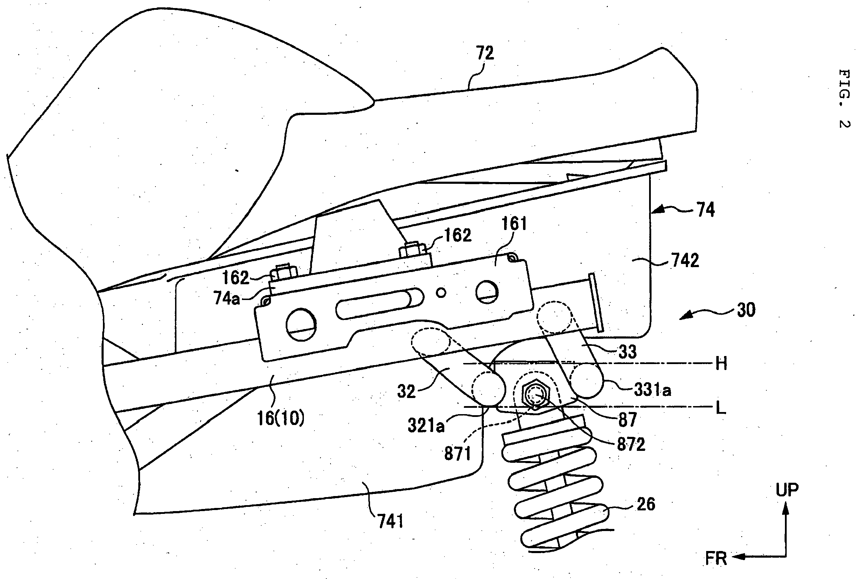

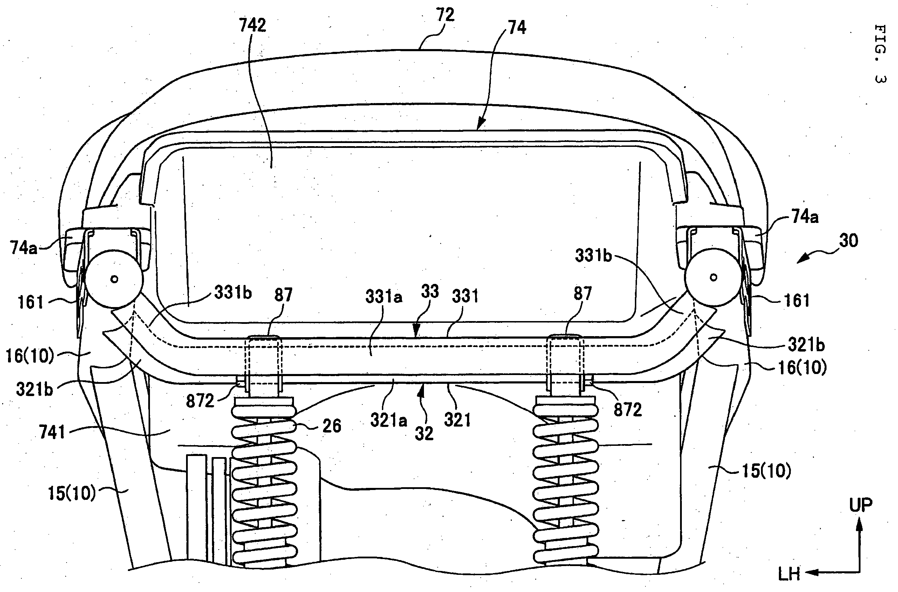

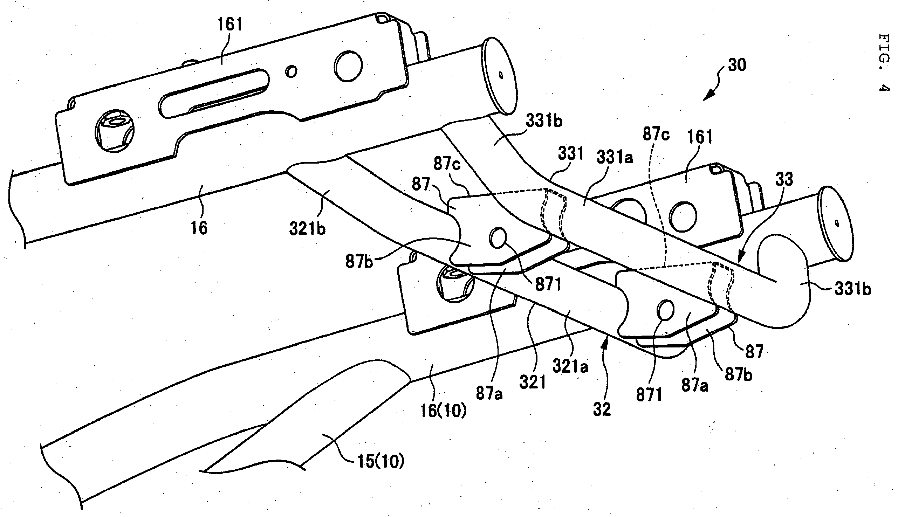

The frame structure 30 of the first embodiment will be described in detail below with reference to Figs. 1 to 4. Fig. 2 is a left side elevational view showing a main section of the frame structure of the motorcycle shown in Fig. 1. Fig. 3 is a rear elevational view showing the frame structure of the motorcycle shown in Fig. 1, as viewed from a rear portion side. Fig. 4 is a perspective view showing the frame structure of the motorcycle shown in Fig. 2.

The frame structure 30 of the motorcycle 1 according to the first embodiment is formed to mainly include, as described earlier, the pair of seat rails 16, the pair of cross pipes 32 and 33, the upper end support bracket 87, the rear portion storage box 74, the swing unit 40, and the rear cushion 26.

Referring to Figs. 2 and 3, the rear portion storage box 74 is disposed between the pair of seat rails 16 as described earlier. The rear portion storage box 74 includes a pair of extended support portions 74a that extend laterally outwardly from either lateral end portion. The rear portion storage box 74 is attached to the pair of seat rails 16 via a pair of mounting members 161 using the pair of extended support portions 74a.

Specifically, the extended support portion 74a of the rear portion storage box 74, in a condition of being placed on an upper surface of the mounting member 161, is fastened to the mounting member 161 with a pair of bolts 162 that are longitudinally spaced apart from each other. Each of mounting members 161 extends longitudinally and is welded to an upper surface side of a corresponding one of the seat rails 16 therealong at a rearward side of the vehicle.

The rear portion storage box 74 includes a first storage portion 741 and a second storage portion 742. The first storage portion 741 and the second storage portion 742 are formed continuously in the vehicle longitudinal direction.

The first storage portion 741 is disposed at a forward side in the rear portion storage box 74 and has a predetermined depth. For example, the first storage portion 741 is deep enough to store therein a helmet.

The second storage portion 742 is disposed at a rearward side of the first storage portion 741. The second storage portion 742 extends rearwardly from a rear portion of an upper portion of the first storage portion 741. The second storage portion 742 is as deep as substantially half the depth of the first storage portion 741. The second storage portion 742 is disposed at an upward side of curved portions 321 and 331 to be described later of the pair of cross pipes 32 and 33.

Referring to Figs. 2 to 4, the pair of cross pipes 32 and 33 connects the pair of seat rails 16 as described earlier. The pair of cross pipes 32 and 33 extends in the width direction (laterally) at a rear portion of the pair of seat rails 16. The cross pipes 32 and 33 are disposed with a predetermined distance apart from each other in the vehicle longitudinal direction (front and rear direction). The pair of cross pipes 32 and 33 includes the first cross pipe 32 disposed at the front side and the second cross pipe 33 disposed in the rear side.

The first cross pipe 32 and the second cross pipe 33 are disposed across the pair of seat rails 16 and welded thereto at both lateral end portions. The first cross pipe 32 and the second cross pipe 33 are attached to lower portions on the inside of the pair of seat rails 16.

Referring to Fig. 2, each of the first cross pipe 32 and the second cross pipe 33 is inclined so as to extend downwardly toward the rear in a side view. Each of the first cross pipe 32 and the second cross pipe 33 is inclined in a direction approximating the stroke direction of the rear cushion 26 in a side view. The first cross pipe 32 is inclined in a horizontal direction at an angle greater than the second cross pipe 33.

Referring to Fig. 3, the pair of the cross pipes 32 and 33 has curved portions 321 and 331, respectively. Each of the curved portions 321 and 331 is curved so as to protrude downwardly in a rear view. The second storage portion 742 of the rear portion storage box 74 is disposed on an upward side of the curved portions 321 and 331.

The curved portions 321 and 331 have horizontal portions 321a, 331a and inclined portions 321b and 331b, respectively, in a rear view.

The horizontal portions 321a and 331a are disposed at a substantially central portion in the vehicle lateral direction. The horizontal portions 321a and 331a extend substantially horizontally in the lateral direction at the center in the lateral direction. The horizontal portions 321a and 331a are disposed on a side lower than the rear end side of the seat rails 16 in a rear view.

The inclined portions 321b and 331b extend obliquely upwardly from either end portion of the horizontal portions 321a and 331a to lower portions on the inside of the pair of seat rails 16.

The upper end support bracket 87 connects the cross pipes 32 and 33 disposed at the front and rear. The upper end support bracket 87 supports the upper end portion of the rear cushion 26. The upper end support bracket 87 is provided in a pair, the two brackets being spaced apart laterally.

The pair of upper end support brackets 87 is disposed across the pair of cross pipes 32 and 33 and welded to the pair of cross pipes 32 and 33 at both longitudinal end portions. Specifically, the pair of upper end support brackets 87 is what is called a both end supported structure having both-end portions connected to the pair of cross pipes 32 and 33.

The upper end support bracket 87 is formed of a U-shaped sheet member. A sheet member to form an inner side surface portion 87a, an outer side surface portion 87b, and an upper side surface portion 87c is sheet-metal processed to thereby form the upper end support bracket 87 having a downwardly opening U-shape in a rear view.

Referring to Fig. 4, the upper end support bracket 87 has a mounting hole portion 871 for supporting the rear cushion 26. One upper end support bracket 87 has two mounting hole portions 871 that penetrate through the upper end support bracket 87 laterally. Referring to Fig. 2, at least part of the mounting hole portion 871 is disposed, in a side view, between an uppermost end and a lowermost end in the horizontal portion 321a of the first cross pipe 32 or the horizontal portion 331a of the second cross pipe 33.

In the embodiment the mounting hole portion 871 is disposed, in a side view, between an upper end virtual line H and a lower end virtual line L as shown in Fig. 2. The upper end virtual line H is a virtual line extending horizontally at an upper end of the horizontal portion 331a of the second cross pipe 33 in a side view. The upper end of the horizontal portion 331a of the second cross pipe 33 is disposed at an uppermost position in the horizontal portion 321a of the first cross pipe 32 and the horizontal portion 331a of the second cross pipe 33. The lower end virtual line L is a virtual line extending horizontally at a lower end of the horizontal portion 321a of the first cross pipe 32 in a side view. The lower end of the horizontal portion 321a of the first cross pipe 32 is disposed at a lowermost position in the horizontal portion 321a of the first cross pipe 32 and the horizontal portion 331a of the second cross pipe 33.

The rear cushion 26 has an upper end portion connected via a bolt 872 to the mounting hole portion 871 in the upper end support bracket 87.

In the frame structure 30 of this embodiment having arrangements as described heretofore, when an impact load is applied from the road surface to the rear wheel 25, the pair of seat rails 16 receives, via the pair of upper end support brackets 87 and the pair of cross pipes 32 and 33, the impact load transmitted to the vehicle body frame 10 via the rear cushion 26. Further, in the frame structure 30 of this embodiment, when the impact load is applied from the road surface to the rear wheel 25, the vehicle body frame 10 receives, via the third front bracket 83 and the sub-bracket 86, the impact load transmitted to the vehicle body frame 10 via the linkage mechanism 51.

The frame structure 30 of the motorcycle 1 according to the first embodiment as described above can achieve the following effects.

In the first embodiment, the vehicle body frame 10 includes, at the rear portion of the pair of seat rails 16, the pair of the cross pipes 32 and 33 that connects the pair of seat rails 16 and is disposed in the vehicle longitudinal direction. Even if pipes with a small diameter is used for the cross pipes, therefore, stiffness equivalent to that of a single cross pipe having a large diameter and high stiffness can be achieved. The cross pipes 32 and 33 can thereby be prevented from becoming large in size. As a result, the volume of the rear portion storage box 74 can be made large. In addition, the rear cushions 26 can be installed in a condition in which the compression range (stroke) is secured.

Additionally, the upper end support brackets 87 are provided that connect the pair of cross pipes 32 and 33 and support the upper end portions of the rear cushions 26. The upper end support brackets 87 are what is called a both-end supported structure having both end portions connected to the pair of cross pipes 32 and 33. As such, the pair of cross pipes 32 and 33 is connected with the upper end support brackets 87, which enhances stiffness of the vehicle body frame 10.

In the first embodiment, the pair of the cross pipes 32 and 33 has the curved portions 321 and 331, respectively, each of which is curved so as to protrude to a downward side. The rear portion storage box 74 is disposed on an upward side of the curved portions 321 and 331. Consequently, the volume of the rear portion storage box 74 can be made large in a portion in which the rear portion storage box 74 is disposed on the upward side of the curved portions 321 and 331.

In the first embodiment, of the pair of cross pipes 32 and 33, the first cross pipe 32 disposed at the front side is inclined so as to extend downwardly toward the rear in a side view. As a result, the first cross pipe 32 is inclined in the stroke direction in which the rear cushion 26 is compressed. As a result, part of load in the stroke direction from the rear cushion 26 acts on a portion at which the first cross pipe 32 is joined to the seat rail 16. Accordingly, the first cross pipe 32 can enhance stiffness of the vehicle body frame 10 relative to the load in the stroke direction received from the rear cushion 26.

In the first embodiment, the pair of cross pipes 32 and 33 is attached to the lower portions on the inside of the pair of seat rails 16. This causes part of a force received from the rear cushion 26 to tend more easily to act on the side of the seat rails 16 via the joint portions between the pair of cross pipes 32 and 33 and the seat rails 16. Accordingly, the pair of cross pipes 32 and 33 can enhance stiffness of the vehicle body frame 10 relative to the load in the stroke direction received from the rear cushion 26.

Additionally, the upper end support bracket 87 is formed into a downwardly opening U-shape in a rear view. The upper end support bracket 87 can therefore be simply structured. Stiffness of the vehicle body frame 10 can thus be enhanced with a simple structure.

In the first embodiment, at least part of the mounting hole portion 871 is disposed, in a side view, between the uppermost end and the lowermost end of the horizontal portions 321a and 331a. As a result, the upper end portion of the rear cushion 26 is connected to the mounting hole portion 871 on an even upward side. The rear cushion 26 can thus be installed in a condition in which the compression range (stroke) is secured.

### <Second Embodiment>

A second embodiment of the present invention will be described below with reference to the accompanying drawings. In the second embodiment, differences from the first embodiment will be mainly described. Like or corresponding parts are identified by the same reference numerals as those used for the first embodiment of the present invention and descriptions for those parts will be omitted or simplified. Unless specifically described, descriptions for the first embodiment are applied a appropriately. The same effects as those of the first embodiment are achieved also in the second embodiment.

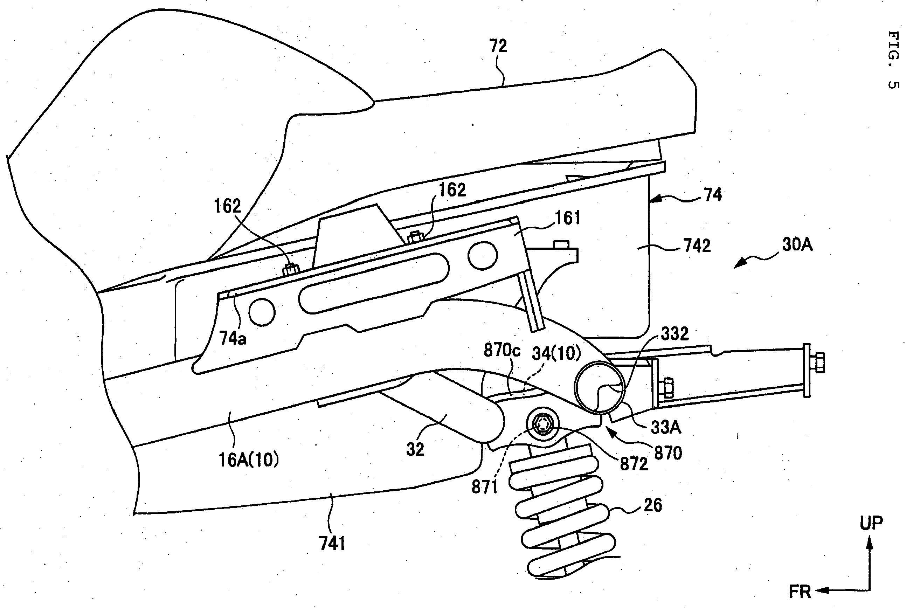

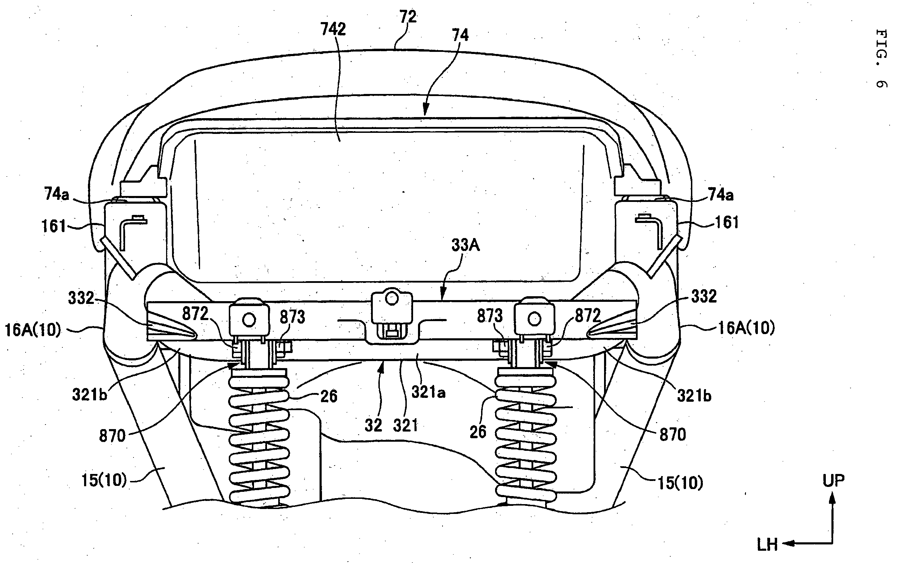

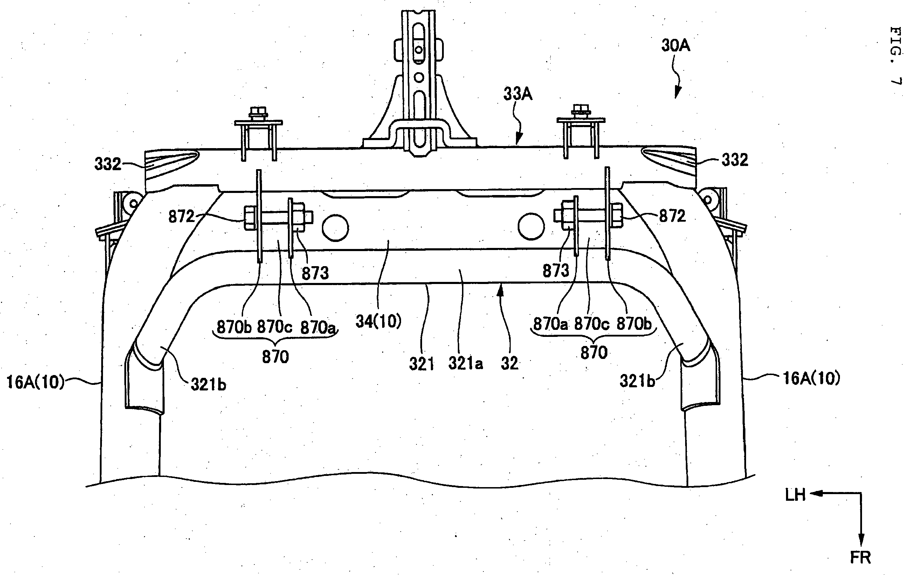

Fig. 5 is a left side elevational view showing a main section of a frame structure of a motorcycle according to the second embodiment of the present invention. Fig. 6 is a rear elevational view showing the frame structure of the motorcycle shown in Fig. 5, as viewed from a rear portion side. Fig. 7 is a bottom view showing the frame structure of the motorcycle shown in Fig. 5, from which a rear cushion is removed, as viewed from a lower portion side.

The second embodiment differs from the first embodiment mainly in the following points: a pair of seat rails 16A has a rear end portion that is shaped differently; a second cross pipe 33A is arranged differently; an upper end support bracket 870 is arranged differently; and a vehicle body frame 10 includes a cross bracket 34.

Referring to Figs. 5 to 7, a frame structure 30A of the second embodiment of the present invention mainly includes the pair of the seat rails 16A, the pair of the cross pipes 32 and 33A, the upper end support bracket 870, the cross bracket 34, a rear portion storage box 74, a swing unit 40 (see Fig. 1), and a rear cushion 26.

The rear end portion of the pair of the seat rails 16A is bent downwardly in a side view as shown in Fig. 5. Specifically, referring to Fig. 5, the pair of the seat rail 16A extends, in a side view, obliquely upwardly from a center portion side thereof toward a rear end portion side thereof and then, at the rear end portion side, bends (curves) downwardly so as to extend downwardly (see Fig. 5). In addition, the pair of the seat rails 16A curves so as to extend toward a center side in a vehicle lateral direction in a rear view (see Fig. 7).

Referring to Figs. 5 to 7, the pair of the cross pipes 32 and 33A connects the pair of the seat rails 16A. The pair of the cross pipes 32 and 33A extends in the width direction (lateral direction) at a rear portion of the pair of the seat rails 16A. The pair of the cross pipes 32 and 33A is disposed spaced a predetermined distance apart from each other in the longitudinal direction (front and rear direction) of the vehicle. The pair of the cross pipes 32 and 33A includes a first cross pipe 32 disposed at a front side and the second cross pipe 33A disposed at a rear side.

The first cross pipe 32 and the second cross pipe 33A are disposed across the pair of the seat rails 16A, 16A and welded thereto at both lateral end portions.

Referring to Figs. 6 and 7, the first cross pipe 32 has a curved portion 321 that curves so as to protrude downwardly in a rear view. The curved portion 321 has a horizontal portion 321a and an inclined portion 321b in a rear view. The first cross pipe 32 according to the second embodiment of the present invention is arranged in the same manner as the first cross pipe 32 according to the first embodiment of the present invention, and detailed descriptions will be omitted.

Referring to Fig. 7, the second cross pipe 33A is attached to rear sides of rear end portions of the pair of the seat rails 16A. The second cross pipe 33A extends substantially horizontally and linearly in the width direction (lateral direction).

Referring to Figs. 5 to 7, the second cross pipe 33A has recessed portions 332 at both end portions thereof. The recessed portion 332 is formed to be recessed inwardly of the second cross pipe 33A at an obliquely downward side of either end portion of the second cross pipe 33A. This enhances the degree of freedom in disposition of members that may be disposed outside the either end portion of the second cross pipe 33A, achieving an enhanced degree of freedom of an exterior.

Referring to Figs. 5 to 7, the second cross pipe 33A is connected to the rear end portions of the pair of the seat rails 16A. Front and upper sides of the both end portions in the lateral direction of the second cross pipe 33A are joined through welding to rear sides of the rear end portions of the pair of the seat rails 16A.

Referring to Fig. 5, a rear portion side of a second storage portion 742 of the rear portion storage box 74 is disposed at an upward side of the second cross pipe 33A. Referring to Fig. 6, the second cross pipe 33A is disposed upwardly of a lower end portion of the first cross pipe 32 in a rear view.

Referring to Figs. 5 to 7, the upper end support bracket 870 connects together the cross pipes 32 and 33A disposed in pairs longitudinally. The upper end support bracket 870 serves as a bracket for supporting an upper end portion of the rear cushion 26. The upper end support bracket 870 is arranged in pairs, one being spaced apart from the other in the width direction (lateral direction).

The pair of the upper end support brackets 870 is disposed across the pair of the cross pipes 32 and 33A, joined thereto through welding at both end portions in the longitudinal direction. Specifically, each of the pair of the upper end support brackets 870 has both end portions connected to the pair of the cross pipes 32 and 33A, having what is called a bridge type structure.

The pair of the upper end support brackets 870 is formed substantially into a U-shape opening downwardly. Referring to Fig. 7, the pair of the upper end support brackets 870 includes an inner side surface portion 870a, an outer side surface portion 870b, and an upper side surface portion 870c. Each of the inner side surface portion 870a and the outer side surface portion 870b is formed of a planar sheet member extending vertically and longitudinally in parallel with each other. The inner side surface portion 870a and the outer side surface portion 870b face each other in the lateral direction of the vehicle, being spaced a predetermined distance apart from each other.

The upper side surface portion 870c is formed of a planar sheet member joining an upper end portion of the inner side surface portion 870a and an upper end portion of the outer side surface portion 870b. In the second embodiment of the present invention, the upper side surface portion 870c is formed of a sheet member that is integrated with the cross bracket 34 to be described later.

Referring to Fig. 7, the inner side surface portion 870a has a front end portion joined to a rear side of the horizontal portion 321a of the first cross pipe 32. The inner side surface portion 870a has a rear end portion disposed at a position spaced apart from a front side of the second cross pipe 33A.

The outer side surface portion 870b has a front end portion joined to the rear side of the horizontal portion 321a of the first cross pipe 32. The outer side surface portion 870b has the rear end portion joined to the front side of the second cross pipe 33A.

The upper side surface portion 870c has a front end portion joined to an upper side of the horizontal portion 321a of the first cross pipe 32. The upper side surface portion 870c has a rear end portion joined to an upper side of the second cross pipe 33A.

Referring to Fig. 5, the upper end support bracket 870 has a mounting hole portion 871 for supporting the rear cushion 26.

One upper end support bracket 870 has two mounting hole portions 871 penetrating laterally through the inner side surface portion 870a and the outer side surface portion 870b. Referring to Figs. 5 to 7, the rear cushion 26 has an upper end portion connected to the mounting hole portion 871 via a bolt 872 and a nut 873.

Referring to Fig. 7, the cross bracket 34 is formed of a planar sheet-like member and forms part of the vehicle body frame 10. The cross bracket 34 is disposed upwardly of the pair of the upper end support brackets 870, 870, the second cross pipe 33A, and the horizontal portion 321a of the first cross pipe 32 and connects together the pair of the upper end support brackets 870, 870.

The cross bracket 34 extends in the vehicle width direction (lateral direction) across the pair of the upper end support brackets 870, 870. The cross bracket 34 has both end portions in the vehicle lateral direction connected to inner side end portions of the upper side surface portions 870c, 870c of the pair of the upper end support brackets 870, 870. In the second embodiment of the present invention, the cross bracket 34 is formed of a sheet member that is integrated with the upper side surface portions 870c, 870c of the pair of the upper end support brackets 870, 870.

Referring to Fig. 7, the cross bracket 34 has a front end portion joined to an upper side of a rear side of the horizontal portion 321a of the first cross pipe 32. The front end portion of the cross bracket 34 is joined across the pair of the upper end support brackets 870, 870 in the vehicle lateral direction.

The cross bracket 34 has a rear end portion joined to an upper side of a rear side of the second cross pipe 33A. The rear end portion of the cross bracket 34 is joined to both ends and a center across the pair of the upper end support brackets 870, 870 in the vehicle lateral direction.

In the frame structure 30A of the motorcycle 1 according to the second embodiment of the present invention described heretofore, the following effects, for example, are achieved, in addition to the same effects as those achieved by the first embodiment of the present invention described earlier.

In the second embodiment of the present invention, the seat rails 16A have the rear end portions bent downwardly in a side view. Of the pair of the cross pipes 32 and 33A, the second cross pipe 33A at the rear side is connected to the rear end portions of the seat rails 16A. This eliminates the need for finishing and related operations for the rear end portions of the seat rails 16A.

Although the foregoing describes the exemplary preferred embodiment in relatively specific detail, the present invention is not limited to the above-described embodiment, but also encompasses various changes falling within the scope of the claims.

For example, in the above-described embodiment, the seat is configured with the rear portion seat 72 and the storage box is configured with the rear portion storage box 74. This is, however, not the only possible arrangement and the seat may be configured with a single seat extending longitudinally and the storage box may be configured with a storage box extending longitudinally.

In the embodiment described above, the present invention has been described as applied to a motorcycle that is made to run with a rear wheel rotatably driven by power generated in an engine (internal combustion engine). This is, however, not the only possible application of the present invention. Specifically, the present invention may also be applied to a two-wheeled electric vehicle that is made to run with a rear wheel rotatably driven only by power generated in an electric motor. The present invention may further be applied to a hybrid saddle riding type vehicle that is made to run with a rear wheel rotatably driven by a combination of power generated in an engine and power generated in an electric motor.

The present invention may still be applied to a motorcycle type or cub type saddle riding type vehicle, in addition to the scooter type saddle riding type vehicle, as long as the vehicle includes a seat for a rider and a seat for a passenger. The present invention can also be applied to a three-wheeled or four-wheeled saddle riding type vehicle as long as the vehicle includes a seat for a rider and a seat for a passenger. Specifically, the saddle riding type vehicle encompasses general types of vehicles straddled by occupants.

- 1:: Motorcycle (saddle riding type vehicle)
- 10:: Vehicle body frame
- 16:: Seat rail
- 25:: Rear wheel
- 26:: Rear cushion (cushion)
- 30:: Frame structure
- 32:: First cross pipe (cross pipe)
- 33:: Second cross pipe (cross pipe)
- 34:: Cross bracket
- 40:: Swing unit (swing arm)
- 72:: Rear portion seat (seat)
- 74:: Rear portion storage box (storage box)
- 87, 870:: Upper end support bracket
- 321:: Curved portion
- 331:: Curved portion
- 871:: Mounting hole portion

## Claims

1. A frame structure (30) of a saddle riding type vehicle (1), comprising:
a vehicle body frame (10) including a pair of left and right seat rails (16) disposed downwardly of a seat (72) for occupant seating;
a storage box (74) disposed downwardly of the seat (72) and between the pair of seat rails (16);
a swing arm (40), swingably supported on the vehicle body frame (10), for rotatably holding a rear wheel (25); and
a cushion (26) having a lower end portion connected to the swing arm (40), wherein the vehicle body frame (10) further includes
a pair of cross pipes (32, 33A) extending laterally in a rear portion of the pair of seat rails (16) to thereby connect the pair of seat rails (16), and
**characterized in**
**that** the pair of cross pipes (32, 33A) is spaced apart longitudinally from each other, and
**that** the seat rails (16A) have rear end portions bent downwardly in a side view, and of the pair of the cross pipes (32, 33A), the second cross pipe (33A) disposed at the rear side is connected to the rear end portions of the seat rails (16A), and
**that** the vehicle body frame (10) further includes an upper end support bracket (87, 870), connecting the pair of cross pipes (32, 33A), for supporting an upper end portion of the cushion (26).

2. The frame structure of a saddle riding type vehicle according to claim 1, wherein
the pair of the cross pipes has curved portions curved so as to protrude to a downward side, and
the storage box is disposed on an upward side of the curved portions.

3. The frame structure of a saddle riding type vehicle according to claim 2,
wherein of the pair of cross pipes, a first cross pipe disposed at a front side is inclined so as to extend downwardly toward a rear in a side view.

4. The frame structure of a saddle riding type vehicle according to claim 2 or 3,
wherein the pair of cross pipes is attached to lower portions on an inside of the pair of seat rails; and
the upper end support bracket is formed into a downwardly opening U-shape in a rear view.

5. The frame structure of a saddle riding type vehicle according to any of claims 2 to 4,
wherein the curved portion in the first cross pipe disposed at the front side or a second cross pipe disposed at a rear side of the pair of cross pipes includes a horizontal portion,
the upper end support bracket has a mounting hole portion for supporting the cushion, and
at least part of the mounting hole portion is disposed between an uppermost end and a lowermost end of the horizontal portion in a side view.

## Patentansprüche

1. Rahmenkonstruktion (30) eines Fahrzeugs (1) vom Sattelfahrttyp, aufweisend:
ein Fahrzeugkarosserierahmen (10), der ein Paar einer linken und rechten Sitzschiene (16) enthält, die unterhalb eines Sitzes (72) zum Platznehmen eines Passagiers angeordnet sind;
einen Aufbewahrungsbehälter (74), der unterhalb des Sitzes (72) und zwischen dem Paar von Sitzschienen (16) angeordnet ist;
einen Schwenkarm (40), der schwenkbar an dem Fahrzeugkarosserierahmen (10) getragen wird, um ein Hinterrad (25) drehbar zu halten; und
einen Dämpfer (26), der einen unteren Endabschnitt hat, der mit dem Schwenkarm (40) verbunden ist, wobei der Fahrzeugkarosserierahmen (10) weiterhin enthält:
ein Paar von Querrohren (32, 33A), die sich seitlich in einem hinteren Abschnitt des Paars von Sitzschienen (16) erstrecken, um so das Paar von Sitzschienen (16) zu verbinden, und
**dadurch gekennzeichnet, dass**
das Paar von Querrohren (32, 33A) längs voneinander beabstandet ist, und
die Sitzschienen (16A) hintere Endabschnitte haben, die in einer Seitenansicht abwärts gebogen sind, und das zweite Querrohr (33A) des Paars von Querrohren (32, 33A), das an der hinteren Seite angeordnet ist, mit einem hinteren Endabschnitt der Sitzschienen (16A) verbunden ist, und
der Fahrzeugkarosserierahmen (10) weiterhin eine Halterung (87, 870) zum Stützen eines oberen Endes enthält, die das Paar von Querrohren (32, 33A) verbindet, um einen oberen Endabschnitt des Dämpfers (26) zu stützen.

2. Rahmenkonstruktion eines Fahrzeugs vom Sattelfahrtyp gemäß Anspruch 1, wobei
das Paar von Querrohren gebogene Abschnitte hat, die so gebogen sind, dass sie zu einer unteren Seite hin vorstehen, und
der Aufbewahrungsbehälter auf einer oberen Seite der gebogenen Abschnitte angeordnet ist.

3. Rahmenkonstruktion eines Fahrzeugs vom Sattelfahrtyp gemäß Anspruch 2,
wobei ein erstes Querrohr des Paars von Querrohren, das an einer vorderen Seite angeordnet ist, so geneigt ist, dass es sich nach unten in Richtung auf eine Hinterseite in einer Seitenansicht erstreckt.

4. Rahmenkonstruktion einen Fahrzeugs vom Sattelfahrtyp gemäß Anspruch 2 oder 3,
wobei das Paar von Querrohren an unteren Abschnitten an einer Innenseite des Paars von Sitzschienen befestigt ist und
die Halterung zum Stützen eines oberen Endes in einer in einer Rückansicht nach unten offenen U-Form gebildet ist.

5. Rahmenkonstruktion eines Fahrzeugs vom Sattelfahrtyp gemäß einem der Ansprüche 2 bis 4,
wobei der gebogene Abschnitt in dem ersten Querrohr, das an der Vorderseite angeordnet ist, oder einem zweiten Querrohr, das an einer hinteren Seite des Paars von Querrohren angeordnet ist, einen horizontalen Bereich umfasst,
die Halterung zum Stützen des oberen Endes einen Befestigungslochabschnitt zum Stützen des Dämpfers hat und
wenigstens ein Teil des Befestigungslochabschnitts zwischen einem obersten Ende und einem untersten Ende des horizontalen Bereichs in einer Seitenansicht angeordnet ist.

## Revendications

1. Structure de cadre (30) d'un véhicule de type à enfourcher (1), comprenant :
un cadre de carrosserie de véhicule (10) comportant une paire de glissières de selle gauche et droite (16) disposée vers le bas d'une selle (72) pour asseoir l'occupant ;
un coffre de rangement (74) disposé vers le bas de la selle (72) et entre la paire de glissières de selle (16) ;
un bras oscillant (40), supporté en oscillation sur le cadre de carrosserie de véhicule (10), permettant de maintenir en rotation une roue arrière (25) ; et
un amortisseur (26) ayant une portion d'extrémité inférieure raccordée au bras oscillant (40),
dans laquelle le cadre de carrosserie de véhicule (10) comporte en outre
une paire de tubes transversaux (32, 33A) s'étendant latéralement dans une portion arrière de la paire de glissières de selle (16) pour raccorder ainsi la paire de glissières de selle (16), et
**caractérisée**
**en ce que** les tubes de la paire de tubes transversaux (32, 33A) sont espacés longitudinalement l'un de l'autre, et
**en ce que** les glissières de selle (16A) ont des portions d'extrémité arrière coudées vers le bas en vue de profil, et parmi la paire des tubes transversaux (32, 33A), le second tube transversal (33A) disposé du côté arrière est raccordé aux portions d'extrémité arrière des glissières de selle (16A), et
**en ce que** le cadre de carrosserie de véhicule (10) comporte en outre une console de support d'extrémité supérieure (87, 870), raccordant la paire de tubes transversaux (32, 33A), permettant de supporter une portion d'extrémité supérieure de l'amortisseur (26).

2. Structure de cadre d'un véhicule de type à enfourcher selon la revendication 1, dans laquelle
la paire des tubes transversaux a des portions incurvées qui sont incurvées de façon à faire saillie sur un côté vers le bas, et
le coffre de rangement est disposé sur un côté vers le haut des portions incurvées.

3. Structure de cadre d'un véhicule de type à enfourcher selon la revendication 2, dans laquelle
parmi la paire des tubes transversaux, un premier tube transversal disposé d'un côté avant est incliné de façon à s'étendre vers le bas vers l'arrière en vue de profil.

4. Structure de cadre d'un véhicule de type à enfourcher selon la revendication 2 ou 3, dans laquelle
la paire de tubes transversaux est fixée à des portions inférieures sur un intérieur de la paire de glissières de selle, et
la console de support d'extrémité supérieure est formée en forme de U à ouverture vers le bas en vue arrière.

5. Structure de cadre d'un véhicule de type à enfourcher selon l'une quelconque des revendications 2 à 4,
dans laquelle la portion incurvée dans le premier tube transversal disposé du côté avant ou un second tube transversal disposé d'un côté arrière de la paire de tubes transversaux comporte une portion horizontale,
la console de support d'extrémité supérieure a une portion de trou de montage permettant de supporter l'amortisseur, et
au moins une partie de la portion de trou de montage est disposée entre une extrémité la plus haute et une extrémité la plus basse de la portion horizontale en vue de profil.
